Europäisches Patentamt

European Patent Office

Office européen des brevets

(19)

(11) Publication number: **0 080 302**
A2

(12) **EUROPEAN PATENT APPLICATION**

(21) Application number: **82306010.8**

(22) Date of filing: **11.11.82**

(51) Int. Cl.³: **B 23 K 31/04**, B 23 K 9/04

(30) Priority: **23.11.81 AU 1661/81**

(43) Date of publication of application: **01.06.83**
**Bulletin 83/22**

(84) Designated Contracting States: **AT BE CH DE FR GB IT LI LU NL SE**

(71) Applicant: **DURALLOY (AUSTRALIA) PTY. LTD.,**
**79 Percival Road, Smithfield New South Wales 2164 (AU)**

(72) Inventor: **Fifield, Robin William Sinclair, 6 Millar Crescent Roundcorner, DUral New South wales (AU)**
Inventor: **Gordon, Ian Alexander Moir, 45 Ulundri Drive, Castle Hill New South Wales (AU)**

(74) Representative: **Brooke-Smith, Fred et al, STEVENS, HEWLETT & PERKINS 5 Quality Court Chancery Lane, London WC2A 1HZ (GB)**

(54) **Wear plate.**

(57) An abrasion and impact resistant wear plate for plug welding to a metal substrate for protection thereof; the plate being comprised of a hot-formed metal alloy having a uniform hardness thoughout the plate in the region 45 to 70 Rockwell C, and having an aperture therethrough for plug welding the plate to the substrate.

The plate may be in the form of a small disc with a single aperture or a larger rectangular sheet. It is relatively inexpensive to produce and has good impact resistance.

FBS/5827

0080302

## "WEAR PLATE"

The present invention relates to an abrasion and impact resistant wear plate for plug welding to a metal substrate for protection thereof. Generally, a plurality of wear plates are plug welded to the substrate and this provides a convenient means of protecting the substrate against abrasive materials.

At present, there are various widely used methods of protecting metal substrates against abrasive materials.

A first method consists in applying weld overlays of a hard metal to the substrate. However, this is a time consuming and costly process, and the welded overlays may suffer from hardness reduction because of dilution with the base metal of the substrate. Furthermore, the high heat inputs to the substrate during welding of overlays may lead to severe metallurgical damage to the substrate with consequent danger of failure.

Secondly, surfaces prone to abrasive wear may be protected by ceramic tiles. The tiles are however fragile and easily broken if subject to impacts.

In a third method, wear plates are welded to areas of the substrate which are prone to wear. Conventional wear plates comprise a hard wear resistant cast alloy, for example a so-called white iron or a chromium carbide alloy. However, these high hardness cast alloys, whilst showing good abrasion resistance are fragile and easily broken by impacts. The alloys are therefor generally cast onto a mild steel backing plate which gives improved structural integrity and allows the wearplate to be welded to a substrate. Such conventional wear plates suffer from a number of disadvantages. There is often a problem of obtaining a satisfactory bond between the cast alloy and the mild steel backing. Attempts have been made to mechanically bond the alloy to the backing by providing an irregular surface on the backing. However, this does not altogether prevent detachment of pieces of the wear alloy from the backing, since the cast wear alloy generally cracks extensively during use. Furthermore, such conventional wear plates have poor impact resistance and cannot be used in situations where they are likely to be subject to impacts, e.g. when used on earth moving equipment.

Also, since a portion of the thickness is taken up by the mild steel backing, the thickness of wear resistant material is necessarily reduced, leading to the need for frequent replacement. Finally, the nature of the high hardness wear alloy and the complex method of construction of the conventional wear plates means that they tend to be expensive.

It is an object of the present invention to mitigate these disadvantages and to provide a wear plate having good impact resistance. The present invention tackles this by employing a hot-formed alloy, e.g. formed by rolling.

The present invention provides an abrasion and impact resistant wear plate for plug welding to a metal substrate for protection thereof; the plate being comprised of a hot-formed metal alloy having a uniform hardness throughout the plate in the region 45 to 70 Rockwell C, and having an aperture therethrough for plug welding the plate to the substrate.

Generally, the hot-formed metal alloy is hardened by means of a heat treatment to a hardness in the range 53 to 61 Rockwell C.

Advantageously, the heat treatment comprises heating to 800 to 1000°C and quenching in a liquid bath.

A preferred embodiment provides an abrasion resisting wear disc for plug welding to a metal substrate for protection thereof, which disc is formed of a wear resistant metal alloy having a uniform hardness throughout the disc in the region 45 to 70 Rockwell C, has a central aperture for plug welding the disc to the substrate, and is dished on a face thereof intended in use to abut the substrate. However, the plate may be any other shape, e.g. square or rectangular.

Usually, a number of these plates will be welded to the substrate to give protection over the desired surface area. The plate is conveniently applied to the substrate simply by plug welding through the aperture. This may be accomplished in a minimum time. It is not recommended that the outer periphery of the plate be welded to the substrate. The heat input required during plug welding is low so that thermal damage to the substrate is minimised, and degradation of the hardness of the wear plate is obviated.

The thickness of the plate is preferably in the region 3 to 10 mm, more preferably 4 to 6 mm. This allows the plate to be uniformly heat treated throughout its thickness, whilst providing sufficient thickness for long life.

The plates may be of a standard easily manageable size, which is convenient and simple to apply. It is not necessary to cut the plates to size and their uniform hardness ensures long abrasion resistance. Advantageously, a plurality of plates are attached when a large surface is to be protected, so that any stresses produced are much less than would be the case where a large wear plate was used to protect the same area.

Discs are usually generally circular of a diameter of 20 to 250 mm, preferably 80 to 90 mm, but it has been found advantageous to provide at least one flat on the disc edge. In use, this flat is generally oriented to face the direction of abrasive movement. Usually, the discs will only touch one another along their curved edges so that the flats are spaced apart. Abrasive product compacted into spaces between the discs has been found to aid in wear resistance, since it is of the same hardness as the product being handled.

The aperture may be circular but is more preferably oval in shape to prevent rotation of the plate around the plug weld when only a single aperture is provided, and to provide good slagging of the weld. Generally an oval aperture will be 20 to 30 mm in length and 15 to 20 mm in width.

The plate is preferably dished or bowed on one face thereof to ensure good contact between the plate and the substrate. The dished surface is intended to abut the substrate. The amount of dishing is relatively small and will generally be in the region 0.1 to 1 mm for a disc having a diameter in the region 20 to 250 mm. For a disc of diameter in the region 80 to 90 mm, the dishing will generally be in the region 0.2 to 0.25 mm. The figures given for the dishing represent the difference in height between the centre and periphery of the disc. Rectangular plates may be dished analogously. As the plug weld cools and contracts, the plate is pulled tightly against the substrate.

Generally, the wear plate is formed of a magnetisable material, so that the plates may be separated from scrap material before it passes to a crusher. The introduction of high hardness material into the crusher would of course create widespread damage.

The present invention also provides a method of protecting the metal substrate against abrasive wear by plug welding thereto one or more of the wear plates.

The invention also extends to a metal substrate protected by having welded thereto one or more of the wear plates.

The wear plates have good abrasion and impact resistance and are susceptible of wide application to a variety of substrates, including teeth, wheels, buckets, blades, shovels, rippers and plough tynes of earth moving equipment; slides, chutes, dredges, mixing paddles, screw conveyors, cyclones, rollers, mills, fan castings, ore bins, machinery guides, crushers, chainways, mixer bins, truck bodies and many other applications requiring abrasion resistance.

Embodiments of the present invention will now be described by way of example only with reference to the drawings, wherein:

Figure 1 is a drawing of one embodiment in the form of a wear disc,

Figure 2 shows a pattern of wear discs suitable for use with a flow of abrasive material in the direction shown by the arrow,

Figure 3 shows a pattern of wear discs where movement of abrasive material occurs in all directions,

Figure 4 shows a dozer track idle wheel protected by discs welded in a spiral pattern,

Figure 5 shows a dozer final drive casing protected by the application of a plurality of discs, and

Figure 6 shows a further embodiment in the form of a rectangular wear plate.

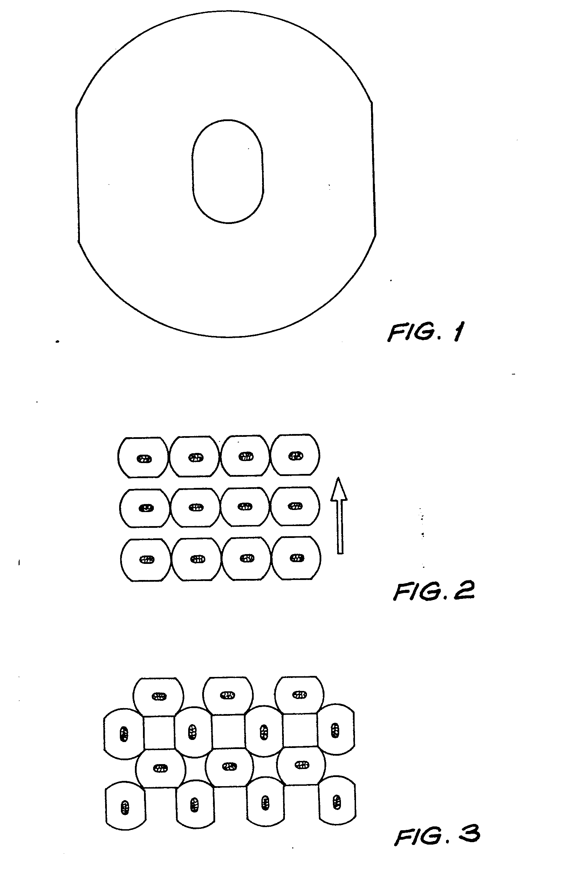

Figure 1 shows a typical abrasion resistant wear disc according to the present invention. The disc is formed of an alloy XK9258S (obtainable from the Australian BHP Company). The alloy has the composition in weight percent:-

| C | 0.5 | - | 0.65 |
| Mn | 0.7 | - | 1.05 |
| Si | 1.60 | - | 2.20 |
| S | 0.05 max | | |
| P | 0.05 max | | |
| Iron | balance | | |

The disc is upset by 0.20 to 0.26 mm so as to be of a dished configuration. The disc is heat treated to give a uniform hardness throughout. One form of the disc has a hardness of 58 to 61 Rockwell C produced by oil quenching at

$900^{\circ}$C, followed by cleaning and finishing with zinc plating. Another type has hardness 53 to 56 Rockwell C produced by oil quenching at $900^{\circ}$C, tempering at $300^{\circ}$C, followed by cleaning and finishing with copper plating.

The disc is applied to a variety of metal substrates, including manganese steel, by plug welding through the central aperture. The plug weld is sufficient to retain the disc in position throughout its wear life and it is unnecessary and undesirable to weld around the outer periphery.

The disc shown in Figure 1 is of a convenient size and weight for cladding areas subject to continuous wear and abrasion. The uniform hardness ensures long life. When wear occurs, it is only necessary to replace those discs which have been worn. The disc advantageously has an overall length of 83-84 mm, the two flats are 35 mm long, and the overall width is 75 mm. The thickness is approximately 5 mm. The oval welding hole is centrally located and has a maximum length of 26 mm and a maximum width of 18 mm.

Figure 2 shows a pattern of discs for use with a substrate subject to movement of abrasive material, e.g. aggregate, in the direction of the arrow. The flats on the disc provide two leading edges which assist wear resistance. It is recommended that the discs touch along the curved surface.

Figure 3 shows a pattern of discs touching along their curved surfaces but having their flats oriented in two directions at right angles so as to resist abrasion caused by movement of abrasive material in all directions.

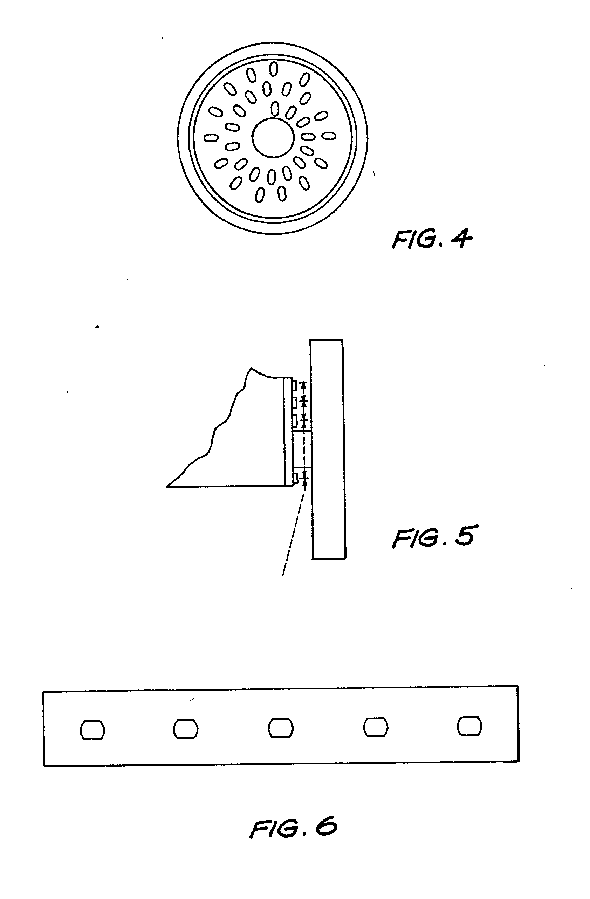

Figure 4 shows a dozer idle wheel protected by the application of spiral pattern of discs against abrasion by material trapped between the wheel and the body of the dozer.

Figure 5 shows a dozer final drive protected by the welding thereto of a number of wear resisting discs.

Figure 6 shows a rectangular wear plate of the same alloy as the disc and having a hardness of 58 to 60 Rockwell C. The plate has an overall length of approximately 500 mm, a width of approximately 75 m and a thickness of 5mm. Five oval welding apertures of the same dimensions as for the disc are provided. The plate is protected by zinc plating and has a concave side (when viewed from one end) for abutting the substrate.

Larger rectangular wear plates may also be provided with one or more rows of welding apertures for covering large areas. If required, large plates may be cut using plasma cutting techniques, which give very localised heat and avoid heat-degradation of the hardness properties of the wear plate.

## CLAIMS

1. An abrasion and impact resistant wear plate for plug welding to a metal substrate for protection thereof; the plate being comprised of a hot-formed metal alloy having a uniform hardness thoughout the plate in the region 45 to 70 Rockwell C, and having an aperture therethrough for plug welding the plate to the substrate.

2. A wear plate according to claim 1 having a thickness in the region 3 to 10 mm.

3. A wear plate according to claim 2 having a thickness in the region 4 to 6 mm.

4. A wear plate according to any preceding claim wherein the aperture is substantially oval in shape, and has a maximum length of 20 to 30 mm and a maximum width of 15 to 20 mm.

5. A wear plate according to any preceding claim wherein the hot-formed metal alloy is hardened by means of a heat treatment to a hardness in the range 53 to 61 Rockwell C.

6. A wear plate according to claim 5 wherein the heat treatment comprises heating to 800 to 1000$^{\circ}$ and quenching in a liquid bath.

7. A wear plate according to any preceding claim wherein the metal-alloy has the composition in weight percent (excluding incidental impurities):

| | | |
|----|------|--------|
| C  | 0.5  | - 0.65 |
| Mn | 0.7  | - 1.05 |
| Si | 1.60 | - 2.20 |
| S  | up to 0.05 | |
| P  | up to 0.05 | |
| Fe | balance | |

8. A wear plate according to any preceding claim wherein the plate is dished or bowed on a face thereof intended to abut the metal substrate.

9. A wear plate according to any preceding claim wherein the plate is formed of a magnetisable alloy.

10. A wear plate according to any preceding claim wherein the plate is rectangular in shape, or is in the form of a disc having flats along two opposed edges.

11. An abrasion resisting wear disc for plug welding to a metal substrate for protection thereof, which disc is formed of a wear resistant metal alloy having a uniform hardness throughout the disc in the region 45 to 70 Rockwell C, has a central aperture for plug welding the disc to the substrate, and is dished on a face thereof intended in use to abut the substrate.

FIG. 1

FIG. 2

FIG. 3

FIG. 4

FIG. 5

FIG. 6